# EUROPÄISCHE PATENTANMELDUNG

(11) **EP 2 112 215 A2**
(43) Veröffentlichungstag der Anmeldung: **28.10.2009**
(21) Anmeldenummer: 08022229.2
(22) Anmeldetag: 22.12.2008
(51) Int. Cl.: C10B 53/02, C10L 5/00, C10L 5/44, C10B 57/02

(54) **Verfahren zur Herstellung eines festen Energieträgers aus Stroh und Pellet aus gepreßtem Pyrolysekoks**

(30) Priorität: 21.12.2007 DE 102007062819
(71) Anmelder: Müller, Wilfried, 46147 Oberhausen (DE); Doczyck, Wolfgang, Dipl.-Ing., 46047 Oberhausen (DE)
(72) Erfinder: Müller, Wilfried, 46147 Oberhausen (DE); Doczyck, Wolfgang, Dipl.-Ing., 46047 Oberhausen (DE)
(74) Vertreter: Gesthuysen, von Rohr & Eggert

(57) **Zusammenfassung**

Die Erfindung betrifft ein Verfahren zur Herstellung eines festen Energieträgers (1) aus Stroh (2), wobei Stroh (2) in einem pyrolytischen Zersetzungsprozeß in Pyrolysekoks (4), Pyrolyseöl (5) und Pyrolysegas (6) zersetzt wird, wobei der Zersetzungsprozeß bei Temperaturen zwischen 150 °C bis 750 °C, vorzugsweise zwischen 300 °C bis 450 °C, insbesondere bis 400 °C, erfolgt und wobei aus dem Pyrolysekoks (4) Formkörper als Energieträger (1) mit einem Energiegehalt von größer als 20 MJ/kg, vorzugsweise von größer als 25 MJ/kg, hergestellt werden.

## Beschreibung

Die Erfindung betrifft ein Verfahren zur Herstellung eines festen Energieträgers aus Stroh, wobei Stroh in einem pyrolytischen Zersetzungsprozeß in Pyrolysekoks, Pyrolyseöl und Pyrolysegas zersetzt wird. Darüber hinaus betrifft die vorliegende Erfindung ein Verfahren zur energetischen Nutzung von Stroh und ein Pellet aus gepreßtem Pyrolysekoks.

Die thermochemische Konversion von Bioenergieträgem, wie beispielsweise Holz, Stroh und Gräsern, kann in die vier Subprozesse Trocknung, pyrolytische Zersetzung, Reduktion (Vergasung) und Oxidation aufgeteilt werden, die sich durch die ablaufenden physikalischen und chemischen Reaktionen und das Temperaturniveau unterscheiden. Je nach apparatetechnischer Gestaltung des Konversionsprozesses laufen die einzelnen Subprozesse unabhängig voneinander oder teilweise parallel ab. Entsprechend dem gewünschten Endprodukt werden einige Subprozesse nicht vollständig ausgefüllt oder gänzlich vermieden. Zum Erreichen der für den Ablauf der Subprozesse notwendigen Temperaturen ist der Brennstoff durch externe oder interne Wärmezufuhr aufzuheizen.

Bei der Vergasung von Bioenergieträgem, wie beispielsweise Holz und holzartigen Rest- und Abfallstoffen in Festbett- oder Wirbelschichtvergasern entsteht ein heizwertreiches Produktgas, das entweder zur Wärmeerzeugung oder nach Produktgasreinigung zur Stromerzeugung in Verbrennungsmotoren oder Gasturbinen eingesetzt werden kann. Die Vergasung erfolgt bei Temperaturen zwischen 700 °C bis 1500 °C und einem Oxidationsmittelverhältnis von 0,2 < λ < 0,5 (autoterm) bzw. λ ≈ 0 (allotherm).

Im Gegensatz zur Vergasung von Holz und holzartigen Rest- und Abfallstoffen ist die Vergasung von Stroh, das meist höhere Konzentrationen an Chlor, Schwefel, Alkalimetallen und Stickstoff enthält als Holz, technologisch aufwendig. Die zur Vergasung von Holz und holzartigen Rest- und Abfallstoffen verwendeten Vergasertypen sind dabei in der Regel ohne Modifikation der Vergasertechnologie nicht geeignet, zur Vergasung von Stroh eingesetzt zu werden.

Darüber hinaus ist aus dem Stand der Technik bekannt, durch eine vorwiegend schnelle pyrolytische Zersetzung unter Sauerstoffabschluß feste Biomassen direkt in überwiegend flüssige Produkte (Pyrolyseöl) umzuwandeln. Die hydrophilen Pyrolyseöle als Hauptprodukte der pyrolytischen Zersetzung bestehen aus einer Vielzahl überwiegend sauerstoffhaltiger Verbindungen und besitzen etwa die Hälfte des Heizwertes konventioneller Heizöle. Sie werden im Stand der Technik nach entsprechender Aufbereitung und Stabilisierung energetisch als Brennstoff für Ölbrenner und Dieselmotoren oder stofflich als Chemierohstoff genutzt. Bei der pyrolytischen Zersetzung, die praktisch bei einem Oxidationsmittelverhältnis von λ < 0,2 und bei Temperaturen zwischen 400 °C und 700 °C erfolgt, werden neben Pyrolyseölen auch Pyrolysekoks und Pyrolysegas erzeugt, in unterschiedlichen Mengen. Aus dem Stand der Technik ist beispielsweise die Pyrolyse als erste Stufe eines zweistufigen Vergasers für Stroh und andere technisch schwieriger zu vergasende Agrobrennstoffe bekannt. Nach dieser bekannten Pyrolysetechnologie können über die Hälfte der Biomasse in Bioöl, 25 Gew-% in Biokoks und nur weniger als 20 Gew.-% in Pyrolysegas umgewandelt werden, Während das Pyrolysegas zur Beheizung dient, können Biokoks und Bioöl als Bioslurry der Vergasung zugeführt werden. Diese Form der energetischen Nutzung von Stroh ist verfahrenstechnisch aufwendig und kostenintensiv.

Aufgabe der vorliegenden Erfindung ist es, Verfahren jeweils der eingangs genannten Art und ein Pellet aus gepreßtem Pyrolysekoks zur Verfügung zu stellen, die eine Verwertung von Stroh als Bioenergieträger bei geringen Kosten und bei geringem verfahrenstechnischen und apparativen Aufwand ermöglichen sollen.

Die vorgenannte Aufgabe ist bei einem Verfahren zur Herstellung eines festen Energieträgers aus, Stroh dadurch gelöst, daß der pyrolytische Zersetzungsprozeß bei Temperaturen zwischen 150 °C bis 750 °C, vorzugsweise zwischen 300 °C bis 450 °C, insbesondere bis 400 °C, erfolgt und daß aus dem Pyrolysekoks Formkörper als Energieträger mit einem Energiegehalt von größer als 20 MJ/kg, vorzugsweise von größer als 25 MJ/kg, hergestellt werden. Das erfmdungsgemäße Pellet ist dementsprechend erhältlich durch pyrolytische Zersetzung von Stroh, wobei das Pellet einen Heizwert von größer als 20 MJ/kg, vorzugsweise einen Heizwert von größer als 25 MJ/kg, aufweisen soll.

Der Erfindung liegt der Grundgedanke zugrunde, als Hauptprodukt des Pyrolyseprozesses einen heizwertreichen Energieträger aus Strohkoks bereitzustellen, wobei die beim pyrolytischen Zersetzungsprozeß entstehenden Pyrolyseöle und das Pyrolysegas Nebenprodukte des erfindungsgemäßen Verfahrens darstellen. Dabei ist es erfindungsgemäß vorgesehen, Formkörper aus Strohkoks herzustellen, wobei sich überraschender Weise gezeigt hat, daß derartige Formkörper einen sehr hohen Energiegehalt aufweisen. Die so erhältlichen, heizwertreichen Energieträger können dann vorzugsweise einer Direktverbrennung zugeführt werden, wobei das im übrigen bei der Herstellung von Strohkoks entstehende Pyrolysegas weiter vorzugsweise gasmotorisch genutzt werden kann. Grundsätzlich ist es natürlich auch möglich, die bei dem erfindungsgemäßen Verfahren erhältlichen Formkörper aus Strohkoks in einer weiteren Prozeßstufe zu vergasen und/oder das Pyrolysegas aus dem Pyrolyseprozeß zu verbrennen, wobei die dabei freigesetzte thermische Energie für den Pyrolyseprozeß genutzt werden kann. Die Formgebung von Strohkoks beispielsweise zu Pellets führt zu einer Erhöhung der Energiedichte, was es zuläßt, den Strohkoks nicht unmittelbar vor Ort zu verbrennen oder zu vergasen, sondern vorzugsweise zu sammeln und auf dem Energiemarkt zu veräußern. Vorrangig geht es bei der Erfindung um die Herstellung von pelletiertem Strohkoks, und nicht um die Herstellung von Pyrolyseölen oder Pyrolysegasen.

Durch entsprechende Ausbildung des für den pyrolytischen Zersetzungsprozeß erforderlichen Pyrolysereaktors und die Festlegung von Parametern wie Betriebstemperatur, Betriebsdruck, Verweilzeit des Strohs in dem Pyrolysereaktor oder Zugabe von Zuschlagsstoffen, sieht es die Erfindung vor, die Ausbeute an Pyrolyse- bzw. Strohkoks mit Bezug auf die eingesetzte Biomasse, d.h. die Masse des eingesetzten Strohs, auf einen Wert von mehr als 40 Gew.-%, vorzugsweise mehr als 50 Gew.-% und insbesondere mehr als 60 Gew.-%, zu steigern. Die Ausbeute an Pyrolysegas (aschefrei) soll dabei weniger als 20 Gew.-%, vorzugsweise weniger als 10 Gew.-%, betragen. Die Ausbeute an Pyrolyseölen (aschefrei) soll schließlich weniger als 50 Gew.-%, vorzugsweise weniger als 40 Gew.-%, insbesondere weniger als 30 Gew.-%, betragen.

Im Ergebnis schlägt die Erfindung eine Optimierung des Zersetzungsprozesses in Richtung auf eine maximale Ausbeute an Pyrolysekoks vor. Es versteht sich, daß dementsprechend die Apparatetechnologie des Pyrolysereaktors ausgebildet sein muß. Ebenso versteht es sich, daß die Prozeßführung und die Prozeßparameter entsprechend aufeinander abgestimmt sein müssen, um bei dem pyrolytischen Zersetzungsprozeß eine maximale Ausbeute an Pyrolysekoks zu erhalten.

Der Zersetzungsprozeß kann vorzugsweise mehrstufig erfolgen, wobei, vorzugsweise, eine erste Pyrolysestufe bei Temperaturen zwischen 150 °C und 300 °C und wenigstens eine weitere Pyrolysestufe bei Temperaturen zwischen 300 °C bis 750 °C, vorzugsweise bis 450 °C, vorgesehen wird. Im ersten Teilschritt des Zersetzungsprozesses kommt es zu einer Entgasung des Rohstoffes, wobei das Rohmaterial in der nächsten Stufe einer weiteren Pyrolyse unterworfen wird. Durch die Begrenzung des oberen Temperaturniveaus auf 750 °C kann das Aufschmelzen von Asche verhindert werden, was aufgrund der hohen Konzentration an Alkalimetallen im Stroh zu Problemen bei dem Pyrolyseprozeß führen könnte. Im übrigen wird durch den Niedertemperatur-Ausgasungsschritt eine hohe Ausbeute von Pyrolysekoks sichergestellt und der Energiebedarf gesenkt. In der zweiten Stufe bis 750 °C, vorzugsweise bis 450 °C, wird die Stufe eines teerfreien Pyrolysekokses erreicht, was die weitere energetische Nutzung des Pyrolysekokses vereinfacht.

Es versteht sich, daß bei mehrstufiger Prozeßführung unterschiedliche Verweilzeiten der Biomasse in den einzelnen Stufen vorgesehen sein können. Die Aufenthaltszeit des Strohs in einer Pyrolysestufe kann vorzugsweise mehr als 30 s, vorzugsweise mehr als 60 s, insbesondere mehr als 300 s, betragen. Im Ergebnis ist bei der Erfindung gerade keine Schnellpyrolyse vorgesehen, wodurch gewährleistet wird, daß ein großer Anteil des Strohs in Pyrolysekoks umgesetzt wird, bei geringerer Ausbeute an flüssigem Kondensat.

Zur weiteren Erhöhung der Koksausbeute kann das Stroh mit einem Katalysator vermischt werden, vorzugsweise mit einem Katalysator aus der Gruppe der Zeolithe, wobei, weiter vorzugsweise, der Anteil an Katalysatormaterial weniger als 15 Gew.-%, insbesondere weniger als 10 Gew.-%, betragen sollte. Durch den Einsatz von Zeolithen kann die Ausbeute an Pyrolysekoks erheblich gegenüber bekannten Verfahren gesteigert werden.

Vorzugsweise werden der Pyrolysekoks und das Pyrolyseöl voneinander getrennt gesammelt bzw. abgeführt. Da letztlich der Pyrolysekoks das Hauptprodukt bei dem erfindungsgemäßen Verfahren darstellt, ist eine Vermischung des Strohkokses mit dem Pyrolyseöl grundsätzlich nicht vorgesehen. Das Pyrolyseöl wird vorzugsweise durch Direktverbrennung zur Bereitstellung von Wärmeenergie genutzt, die dem Pyrolyseprozeß zugeführt wird. Abweichend zum Stand der Technik ist es somit vorzugsweise vorgesehen, das Pyrolyseöl direkt vor Ort zu verbrennen, um die für den Pyrolyseprozeß erforderliche Wärmeenergie bereitzustellen. Grundsätzlich ist es natürlich auch möglich, das Pyrolyseöl zu sammeln, ggf. aufzubereiten und dem Energiemarkt zuzuführen.

Zur Erhöhung der Energiedichte kann der Pyrolysekoks aufgemahlen und anschließend pelletiert werden. Die mittlere Korngröße des aufgemahlenen Pyrolysekokses kann weniger als 500 µm, vorzugsweise weniger als 200 µm, insbesondere weniger als 100 µm, betragen. Das erfindungsgemäße Pellet weist dementsprechend eine Dichte von mehr als 1200 kg/m³, vorzugsweise von mehr als 1300 kg/m³, insbesondere von mehr als 1500 kg/m³, auf. Der Kohlenstoffgehalt im Strohkoks-Pellet sollte größer als 80 Gew.-%, vorzugsweise größer als 85 Gew.-%, insbesondere größer als 90 Gew.-%, sein. Die Restfeuchte beträgt vorzugsweise weniger als 8 Gew.-%, weiter vorzugsweise weniger als 6 Gew.-%, insbesondere weniger als 4 Gew.-%. Schließlich sollte das erfindungsgemäße Pellet einen geringen Chlorgehalt von weniger als 0,2 bis 0,5 Gew.-%, vorzugsweise von weniger als 0,1 Gew.-%, aufweisen, was selbstverständlich durch die Betriebsparameter des Pyrolyseprozesses und durch die Auswahl von geeigneten Strohmaterialien als Einsatzmaterial sowie ggf. durch Zuschlagsstoffe beeinflußt werden kann. Durch die erfindungsgemäß vorgesehene Zusammensetzung des Pellets eignet sich dieses Produkt in besonderem Maße als Energieträger für eine anschließende Verbrennung oder Vergasung.

Der Pyrolysekoks kann nach dem Aufmahlen mit einem Binder vermischt werden, um die anschließende Pelletierung zu erleichtern. Beispielsweise kann Pyrolyseöl als Binder eingesetzt werden. Grundsätzlich ist es aber auch möglich, den Pyrolysekoks binderfrei bei hohem Druck zu pelletieren, wobei als Presse beispielsweise eine Kollergangflachmatrizenpresse verwendet werden kann. Das Pellet sollt eine Länge von 10 mm bis 30 mm aufweisen bei einem Durchmesser von vorzugsweise kleiner als 10 mm. Dadurch wird der Transport und die weitere Handhabung im Verbrennungs- bzw. Vergasungsprozeß erleichtert.

Im übrigen kann vorgesehen sein, daß der Pyrolysekoks nach dem Aufmahlen mit wenigstens einem einen Heizwert von mehr als 10 MJ/kg aufweisenden Zuschlagsstoff vermischt und anschließend pelletiert wird. Bei dem Zuschlagsstoff handelt es sich bei dieser Ausführungsform des erfindungsgemäßen Verfahrens ebenfalls um einen Energieträger, der jedoch einen geringeren Heizwert als der Pyrolysekoks aufweist. Grundsätzlich können natürlich auch andere Zuschlagsstoffe mit einem Heizwert von weniger als 10 MJ/kg eingesetzt werden oder Zuschlagsstoffe, die einen im Vergleich zum Pyrolysekoks höheren Heizwert aufweisen. Durch die Zuschlagsstoffe läßt sich der Heizwert der bei dem erfindungsgemäßen Verfahren aus dem Strohkoks erhältlichen Formkörper entsprechend einstellen und optimieren.

Als Einsatzmaterial für den Pyrolyseprozeß kann pelletiertes Stroh vorgesehen sein. Der Feuchtegehalt von pelletiertem Stroh sollte weniger als 10 Gew.-%, vorzugsweise weniger als 5 Gew.-%, betragen. Durch die Verwendung von pelletiertem Stroh wird die Prozeßführung im Pyrolysereaktor vereinfacht. Grundsätzlich kann das Stroh jedoch auch in nicht-pelletierter Form zum Einsatz kommen, ggf. auch als Preßballen.

Wie bereits oben darauf hingewiesen worden ist, kann der Pyrolysekoks nach der Pelletierung zur weiteren Nutzung vergast oder verbrannt werden. Das Pyrolysegas aus dem Pyrolyseprozeß von Stroh wird dagegen vorzugsweise gasmotorisch genutzt, wobei eine vorgeschaltete Gasreinigung vorgesehen sein kann. Wird das Pyrolysegas verbrannt, ist eine vorgeschaltete Gasreinigung nicht erforderlich.

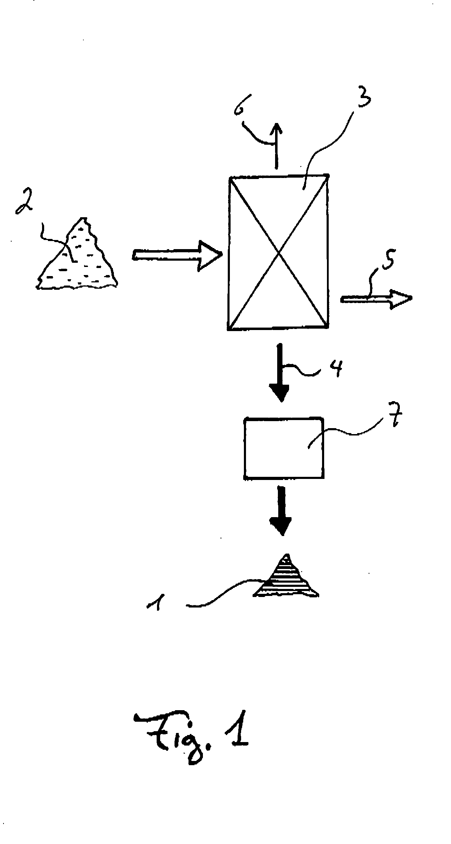

Im Einzelnen gibt es eine Vielzahl von Möglichkeiten, das erfindungsgemäße Verfahren auszugestalten und weiterzubilden, wobei einerseits auf die abhängigen Patentansprüche und andererseits auf die nachfolgende schematische Beschreibung der Erfindung unter Bezugnahme auf die Zeichnung verwiesen wird.

In der einzigen Figur der Zeichnung ist schematisch ein Verfahren zur Herstellung eines festen Energieträgers 1 aus Stroh 2 dargestellt, wobei das Stroh 2 in einem Pyrolysereaktor 3 in Pyrolysekoks 4, Pyrolyseöl 5 und Pyrolysegas 6 zersetzt wird. Bei dem Pyrolysereaktor 3 kann es sich vorzugsweise um einen Drehrohrreaktor handeln. Der pyrolytische Zersetzungsprozeß erfolgt bei Temperaturen bis 750 °C, um das Aufschmelzen von Asche im Pyrolysereaktor 3 zu verhindern. Der Pyrolysekoks 4 wird nach der Entnahme aus dem Reaktor 3 in der Stufe 7 aufgemahlen und mit hohem Druck verpreßt, so daß der Energieträger 1 in Form von Pellets mit einem Energiegehalt von größer als 20 MJ/kg vorliegt.

Die Ausbeute an Pyrolysekoks 4 beträgt mehr als 40 Gew.-% bezogen auf die Masse des eingesetzten Strohs 2. Die Ausbeute an Pyrolysegas 6 beträgt ca. 20 Gew.-% und die Ausbeute an Pyrolyseöl 5 ca. 50 Gew.-%. Dies setzt eine entsprechende Ausbildung des Reaktors 3 und die Festlegung auf bestimmte Betriebsbedingungen voraus. Nicht dargestellt ist, daß der pyrolytische Zersetzungsprozeß in dem Pyrolysereaktor 3 auch mehrstufig erfolgen kann.

Wenngleich die Erfindung vorrangig die Herstellung von festen Energieträgern aus Strohkoks betrifft, ist es grundsätzlich möglich, nach dem erfindungsgemäßen Verfahren feste Energieträger auch aus anderen Biomassen, wie Holz und holzartigen Rohstoffen sowie Gräsern oder dgl., herzustellen.

## Patentansprüche

1. Verfahren zur Herstellung eines festen Energieträgers (1) aus Stroh (2), wobei Stroh (2) in einem pyrolytischen Zersetzungsprozeß in Pyrolysekoks (4), Pyrolyseöl (5) und Pyrolysegas (6) zersetzt wird, wobei der Zersetzungsprozeß bei Temperaturen zwischen 150 °C bis 750 °C, vorzugsweise zwischen 300 °C bis 450 °C, insbesondere bis 400 °C, erfolgt und wobei aus dem Pyrolysekoks (4) Formkörper als Energieträger (1) mit einem Energiegehalt von größer als 20 MJ/kg, vorzugsweise von größer als 25 MJ/kg, hergestellt werden.

2. Verfahren nach Anspruch 1, **dadurch gekennzeichnet, daß** die Ausbeute an Pyrolysekoks (4) (aschefrei) mit bezug auf die eingesetzte Biomasse mehr als 40 Gew.-%, vorzugsweise mehr als 50 Gew.-% und insbesondere mehr als 60 Gew.-%, beträgt.

3. Verfahren nach Anspruch 1 oder 2, **dadurch gekennzeichnet, daß** die Ausbeute an Pyrolysegas (6) (aschefrei) mit bezug auf die eingesetzte Biomasse weniger als 20 Gew.-%, vorzugsweise weniger als 10 Gew.-%, beträgt.

4. Verfahren nach einem der vorhergehenden Ansprüche, **dadurch gekennzeichnet, daß** die Ausbeute an Pyrolyseöl (5) (aschefrei) mit bezug auf die eingesetzte Biomasse weniger als 50 Gew.-%, vorzugsweise weniger als 40 Gew.-%, insbesondere weniger als 30 Gew.-%, beträgt.

5. Verfahren nach einem der vorhergehenden Ansprüche, **dadurch gekennzeichnet, daß** der Zersetzungsprozeß in Richtung auf eine maximale Ausbeute an Pyrolysekoks (4) optimiert wird.

6. Verfahren nach einem der vorhergehenden Ansprüche, **dadurch gekennzeichnet, daß** der Zersetzungsprozeß mehrstufig durchgeführt wird, wobei, vorzugsweise, die erste Pyrolysestufe bei Temperaturen zwischen 150 °C und 300 °C und wenigstens eine weitere Pyrolysestufe bei Temperaturen zwischen 300 °C bis 750 °C, vorzugsweise bis 450 °C, durchgeführt wird.

7. Verfahren nach einem der vorhergehenden Ansprüche, **dadurch gekennzeichnet, daß** die Aufenthaltszeit des Strohs (2) in einer Pyrolysestufe mehr als 30 s, vorzugsweise mehr als 60 s, insbesondere mehr als 300 s, beträgt.

8. Verfahren nach einem der vorhergehenden Ansprüche, **dadurch gekennzeichnet, daß** das Stroh (2) mit einem Katalysator vermischt wird, vorzugsweise aus der Gruppe der Zeolithe, wobei, weiter vorzugsweise, der Anteil an Katalysatormaterial weniger als 15 Gew.-%, insbesondere weniger als 10 Gew.-%, beträgt.

9. Verfahren nach einem der vorhergehenden Ansprüche, **dadurch gekennzeichnet, daß** der Pyrolysekoks (4) und das Pyrolyseöl (5) voneinander getrennt werden.

10. Verfahren nach einem der vorhergehenden Ansprüche, **dadurch gekennzeichnet, daß** der Pyrolysekoks (4) aufgemahlen wird und daß nach dem Aufmahlen eine Pelletierung des Pyrolysekokses (4) vorgesehen wird.

11. Verfahren nach einem der vorhergehenden Ansprüche, **dadurch gekennzeichnet, daß** der aufgemahlene Pyrolysekoks (4) auf mittlere Korngrößen von weniger als 500 µm, vorzugsweise auf weniger als 200 µm, insbesondere auf weniger als 100 µm, aufgemahlen wird.

12. Verfahren nach einem der vorhergehenden Ansprüche, **dadurch gekennzeichnet, daß** der Pyrolysekoks (4) nach dem Aufmahlen mit einem Binder vermischt wird, insbesondere mit wenigstens einem Pyrolyseöl (5), und daß anschließend die Pelletierung erfolgt.

13. Verfahren nach einem der vorhergehenden Ansprüche, **dadurch gekennzeichnet, daß** der Pyrolysekoks (4) binderfrei bei hohem Druck pelletiert wird.

14. Verfahren nach einem der vorhergehenden Ansprüche, **dadurch gekennzeichnet, daß** der Pyrolysekoks (4) vorzugsweise nach dem Aufmahlen mit wenigstens einem einen Heizwert von mehr als 10 MJ/kg aufweisenden Zuschlagsstoff vermischt und anschließend pelletiert wird.

15. Verfahren nach einem der vorhergehenden Ansprüche, **dadurch gekennzeichnet, daß** das Stroh (2) pelletiert eingesetzt wird.

16. Verfahren nach einem der vorhergehenden Ansprüche, **dadurch gekennzeichnet, daß** der Feuchtegehalt des pelletierten Strohs (2) weniger als 10 Gew.-%, vorzugsweise weniger als 5 Gew.-%, beträgt.

17. Verfahren nach einem der vorhergehenden Ansprüche, **dadurch gekennzeichnet, daß** der Pyrolysekoks (4) nach der Pelletierung vergart oder verbrannt wird.

18. Verfahren nach einem der vorhergehenden Ansprüche, **dadurch gekennzeichnet, daß** das Pyrolysegas (6) einer gasmotorischen Nutzung zugeführt wird.

19. Verfahren nach einem der vorhergehenden Ansprüche, **dadurch gekennzeichnet, daß** eine Gasreinigung des Pyrolysegases (6) vorgesehen ist.

20. Verfahren nach einem der vorhergehenden Ansprüche, **dadurch gekennzeichnet, daß** das Pyrolysegas (6) verbrannt wird.

21. Verfahren zur energetischen Nutzung von Stroh (2), wobei das Stroh (2) in einem Zersetzungsprozeß in Pyrolysekoks (4), Pyrolyseöl (5) und Pyrolysegas (6) konvertiert wird, insbesondere nach einem der vorhergehenden Ansprüche, und wobei der Pyrolysekoks (4) verbrannt und das Pyrolysegas (5) gasmotorisch genutzt wird.

22. Pellet aus gepreßtem Pyrolysekoks (4), wobei der Pyrolysekoks (4) erhältlich ist durch pyrolytische Zersetzung von Stroh (2), vorzugsweise nach einem der vorhergehenden Ansprüche, mit einem Heizwert von größer als 20 MJ/kg, vorzugsweise mit einem Heizwert von größer als 25 MJ/kg.

23. Pellet nach Anspruch 22, **dadurch gekennzeichnet, daß** die Pelletdichte mehr als 1200 kg/m³, vorzugsweise mehr als 1300 kg/m³, insbesondere mehr als 1500 kg/m³, beträgt.

24. Pellet nach Anspruch 22 oder 23, **dadurch gekennzeichnet, daß** der Kohlenstoffgehalt des Pellets größer als 80 Gew.-%, vorzugsweise größer als 85 Gew.-%, insbesondere größer als 90 Gew.-%, ist.

25. Pellet nach einem der vorhergehenden Ansprüche, **dadurch gekennzeichnet, daß** die Restfeuchte des Pellets kleiner als 8 Gew.-%, vorzugsweise kleiner als 6 Gew.-%, insbesondere kleiner als 4 Gew.-%, ist.

26. Pellet nach einem der vorhergehenden Ansprüche, **dadurch gekennzeichnet, daß** der Chlorgehalt des Pellets kleiner als 0,2 bis 0,5 Gew.-%, vorzugsweise kleiner als 0,1 Gew.-%, ist.

27. Pellet nach einem der vorhergehenden Ansprüche, **dadurch gekennzeichnet, daß** die Länge ca. 10 bis 30 mm beträgt bei einem Durchmesser von vorzugsweise kleiner als 10 mm.
